# EUROPÄISCHE PATENTSCHRIFT

(11) **EP 0 619 264 B1**
(45) Veröffentlichungstag und Bekanntmachung des Hinweises auf die Patenterteilung: **28.05.1997**
(21) Anmeldenummer: 94104937.1
(22) Anmeldetag: 29.03.1994
(51) Int. Cl.: B66C 1/12, F16B 45/00, E04G 21/14

(54) **Anordnung zum Ankuppeln eines Seiles einer Hebevorrichtung an ein Fertigteil**
Arrangement for coupling of a cable of a lifting device on assembly units
Disposition pour accoupler un câble à un appareil de levage des éléments de montage

(30) Priorität: 08.04.1993 DE 4311757
(43) Veröffentlichungstag der Anmeldung: 12.10.1994
(73) Patentinhaber: HALFEN GmbH & CO. Kommanditgesellschaft, 40764 Langenfeld-Richrath (DE)
(72) Erfinder: Lotze, Dieter, DE-75433 Maulbronn (DE); Fröhlich, Klaus, DE-75177 Pforzheim (DE)
(74) Vertreter: Kerkhof, Marianne

(56) Entgegenhaltungen:
- EP-A- 0 161 652
- DE-A- 3 204 930
- DE-A- 3 329 374

## Beschreibung

Die Erfindung betrifft eine Anordnung zum Ankuppeln eines Seiles einer Hebevorrichtung an ein anzuhebendes oder zu transportierendes Fertigteil, insbesondere Betonfertigteil, gemäß den Merkmalen des Gattungsbegriffes des Anspruches 1.

Eine bekannte Anordnung dieser Art (EP-A 0 161 652, DE-A-3 204 930) besteht aus einer Ringschraube, die sich in den Betonfertigteil einschrauben läßt und ein Ringelement besitzt, das gegenüber dem in den Betonfertigteil eingeschraubten Gewindebolzen verdrehbar ist. Am äußeren Ende des Gewindebolzens befindet sich ein Halteglied, das das Ringelement abstützt. Infolge der Verdrehbarkeit des Ringelementes paßt sich dieses bei Schrägzügen der Zugrichtung an, ohne daß sich der Gewindebolzen im Fertigteil verdreht. Dadurch werden Überbeanspruchungen durch Schrägzüge weitgehend vermieden. Der unverdrehbar im Fertigteil sitzende Gewindebolzen wirkt als Zuganker und ist in eine in das Fertigteil einbetonierte Hülse eingeschraubt, oberhalb der eine Stützplatte vorgesehen ist, die mit dem Gewindebolzen einstückig ausgebildet ist. Die um 360° drehbare Ringschraube hat eine oberhalb des Gewindebolzens sich erstreckende, quer liegende Öffnung, in die ein Teil der Hebevorrichtung , beispielsweise ein Zwischenglied in der Form eines massiven Ringes oder einer Seilschlaufe, eingreift.

Nachteilig bei dieser bekannten Ausführung ist, daß der Angriffspunkt der Hebekraft bei Schrägzug mit relativ großem Abstand von der Oberfläche des fortzubewegenden Fertigteiles liegt, so daß bei Schräg- und Querzug Teile der Vorrichtung, wie insbesondere die Ringschraube, der Gewindebolzen und die Gewindehülse, erheblichen Biegekräften ausgesetzt sind, die bei Querbeanspruchung sogar die Gefahr der Abknickung der Gewindehülse bzw. des Zugankers nicht ausschließen. Die bekannte Vorrichtung muß demgemäß aus Sicherheitsgründen entsprechend überdimensioniert werden. Weiter ist nachteilig, daß das ovale, nach Art eines Handgriffes ausgebildete Ringelement mit seiner gegenüber der Plattenoberfläche sehr hoch liegenden, ovalen Aufnahmeöffnung für das Zwischenglied bzw. eine Seilschlaufe selbst je nach Angriffspunkt der Hebekraft unterschiedlichen Zug-, Biege- und Querkräften ausgesetzt ist und demgemäß entsprechend dimensioniert werden muß.

Der Erfindung liegt die Aufgabe zugrunde, eine Anordnung der gattungsgemäßen Art unter Vermeidung der Nachteile der bekannten Vorrichtung zu schaffen, bei der die Beanspruchungen auf Biegung, insbesondere des in die einbetonierte Gewindehülse eingeschraubten Zugankers bei Schräg- und und Querzügen optimal gering ist und die so gestaltet ist, daß die beim Heben der Last auftretenden Kräfte einen kleinstmöglichen Abstand von der Oberfläche der anzuhebenden Last haben, sowie ein von der Zugrichtung abhängiger, punktförmiger Angriff der Hebekraft an der Vorrichtung vermieden ist.

Diese Aufgabe wird bei einer Anordnung mit den Merkmalen des Gattungsbegriffes des Anspruches 1 durch die Merkmale seines kennzeichnenden Teiles gelöst.

Dadurch, daß bei der erfindungsgemäßen Lösung die eigentliche Aufnahme für das Hebeseil oder ein Zwischenglied der Hebevorrichtung, also die Aufnahme zur Seilführung, infolge Abstützung durch den Zuganker drehbar abgestützt ist, kann sie sich in bekannter Weise um 360° drehen und sich somit auf die jeweilige Zugrichtung einstellen. Da jedoch die Aufnahme für die Seilführung beispielsweise durch eine plane Unterfläche so ausgebildet ist, daß sie unmittelbar auf der Oberfläche der Last, also auf der Fertigteiloberfläche, aufliegen kann, und das Hebeseil um einen bogenförmigen, vorzugsweise kreisförmigen Abschnitt von 180° annähernd parallel und in unmittelbarer Nähe neben der Oberfläche des Fertigteils geführt ist, werden insbesondere bei Hebekräften, die parallel oder geringfügig schräg zur Fertigteiloberfläche wirken, Zuganker und Gewindehülse minimal auf Biegung beansprucht, wobei die Trägfähigkeit der Hülse und der Vorrichtung selbst erheblich verbessert werden.

Wenn in weiterer Ausbildung der Erfindung die Aufnahme als beispielsweise tellerartige Platte ausgeführt ist, bei der ein Teil ihres Umfanges, vorzugsweise von 180°, als Abschnitt für eine Seilführung ausgebildet ist, derart, daß das Seil in diesem Abschnitt geführt ist, ergibt sich eine ausreichend große Absützfläche der Vorrichtung an der Fertigteiloberfläche, wodurch auftretende Biegemomente über die Gewindehülse im Fertigteil, den Zuganker und durch die Abstützkraft an der Fertigteiloberfläche aufgenommen werden können. Die Aufnahme kann auch als halbovale Platte mit einem Abschnitt für die Seilführung oder in einer ähnlichen Form ausgeführt sein. Die Biegetragfähigkeit der Gewindehülse bzw. des Zugankers braucht somit nicht voll ausgenutzt zu werden.

Vorteilhaft ist der Seilführungsabschnitt von etwa 180° am Umfang der Platte ausgebildet und liegt zentrisch zu einer in der Platte vorgesehenen Bohrung für den Durchtritt des Zugankers. Hierdurch kann das Seil in unmittelbarer Nähe der Oberfläche des Fertigteiles in einem vorzugsweise halbkreisförmigen Bogen um dem Umfang der Platte, die selbst etwa halbkreisförmig ausgebildet sein kann, geführt werden. Diese Seilführung an der Stirnseite der als Platte ausgebildeten Aufnahme ermöglicht einen kleinstmöglichen Abstand zwischen Seil und Fertigteiloberfläche. Außerdem kann die Aufnahmeplatte vergleichsweise niedrig ausgeführt werden, da sie nur von stark reduzierten Zug- und Biegekräften beansprucht wird.

Eine sehr vorteilhafte weitere Ausgestaltung ergibt sich, wenn der plattenförmigen Aufnahme mit ihrem Abschnitt für die Führung des Seiles zu dessen Umlenkung von der Richtung parallel zur Oberfläche des Fertigteiles in eine nach oben gerichtete äußere Zugrichtung entsprechende Umlenkmittel zugeordnet sind. Hierzu können vorteilhaft an der plattenförmigen Aufnahme mit ihrem Abschnitt für die Seilführung an den beiden Endbereichen des Seilführungsabschnittes entsprechende Umlenkflächen vorgesehen sein. Hierdurch wird das etwa parallel und mit minimalem Abstand von der Fertigteiloberfläche geführte Seil in Richtung zur Hebevorrichtung, also nach oben hin, umgelenkt. Diese nach oben gerichteten Umlenkflächen sind bei einer einfachen Ausführungsform der Anordnung an den Enden eines Steges angeordnet, der vorzugsweise annähernd diagonal zum Seilführungsabschnitt 7 und oberhalb der Platte liegt und einstückig mit dieser ausgebildet ist. Hierdurch wird eine einwandfreie Führung des Seiles, insbesondere bei aufwärts gerichtetem Zug, erreicht, bei der das Seil außer seiner horizontalen Umschlingung der Platte infolge der vorgegebenen, genau definierten Umlenkflächen in einem vorbestimmbaren Bogen nach oben geführt wird, ohne daß dabei die Gefahr einer zu starken Krümmung oder gar die der Abknickung des Seiles besteht. Vorteilhaft werden diese Umlenkflächen durch die Enden des Quersteges gebildet, die die Endbereiche des Seilführungsabschnittes beidseitig so weit überragen, daß eine einwandfreie und vollständige Anlage des Seiles im Bereich dieser Umlenkstellen gegeben ist.

Die Erfindung wird nachstehend anhand der Zeichnungen näher erläutert. Diese zeigen:
- Fig. 1: eine Explosivdarstellung einer Ausführungsform der erfindungsgemäßen Anordnung,
- Fig. 2: in Seitenansicht, teilweise geschnitten, die Anordnung nach Fig. 1, die mittels Zugankers auf der Oberfläche einer Betonfertigplatte befestigt ist,
- Fig. 3: dieselbe Anordnung, jedoch in Ansicht des Pfeiles III,
- Fig. 4: eine Draufsicht auf die Anordnung nach Fig. 2,
- Fig. 5: eine abgewandelte Ausführung der als Platte ausgebildeten Aufnahme in Ansicht von unten,
- Fig. 6: eine Ansicht von oben auf die plattenförmige Aufnahme der Fig. 5,
- Fig. 7: einen Schnitt nach Linie VII-VII in Fig. 5,
- Fig. 8: einen Schnitt nach Linie VIII-VIII in Fig. 6,
- Fig. 9: zeigt eine etwas abgeänderte Ausführung der Platte in Draufsicht,
- Fig. 10: eine Ansicht in Richtung des Pfeiles X in Fig. 9,
- Fig. 11: eine Ansicht in Richtung Pfeil XI in Fig. 9 und
- Fig. 12: verschiedene Ausführungen des Zugankers für verschiedene Laststufen für ein und dieselbe Größe der Gewindehülse im Betonfertigteil sowie eine Ausführung des mit den Paßstücken zusammenwirkenden Sicherungsstiftes.

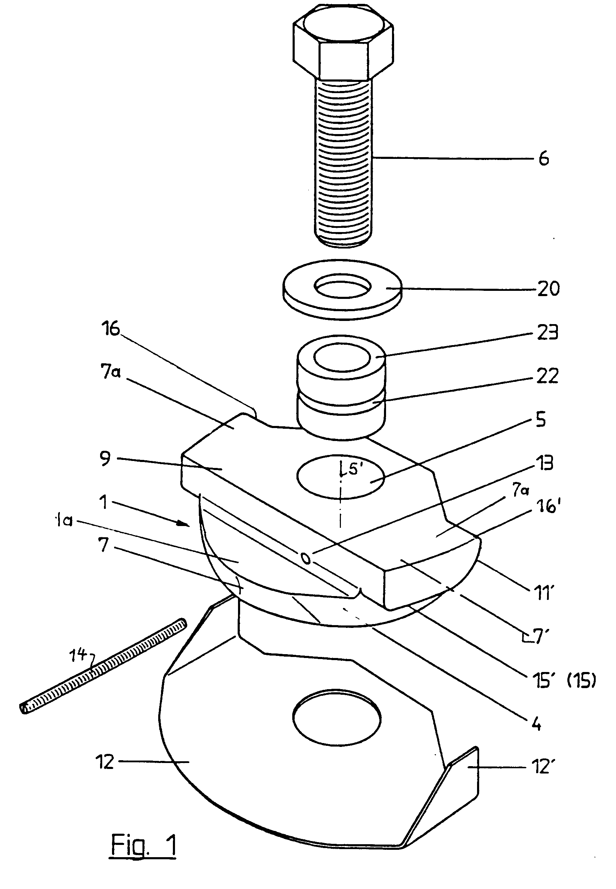

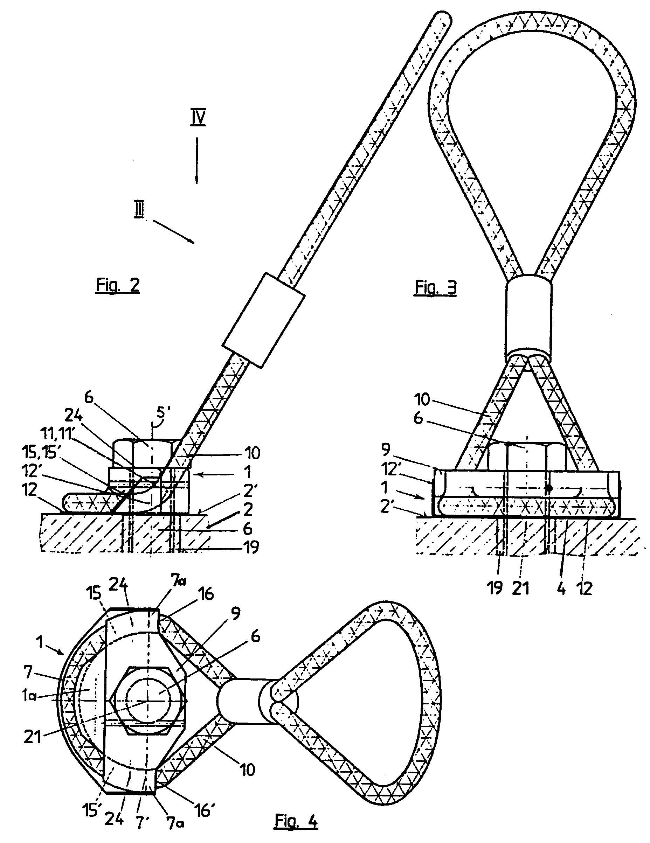

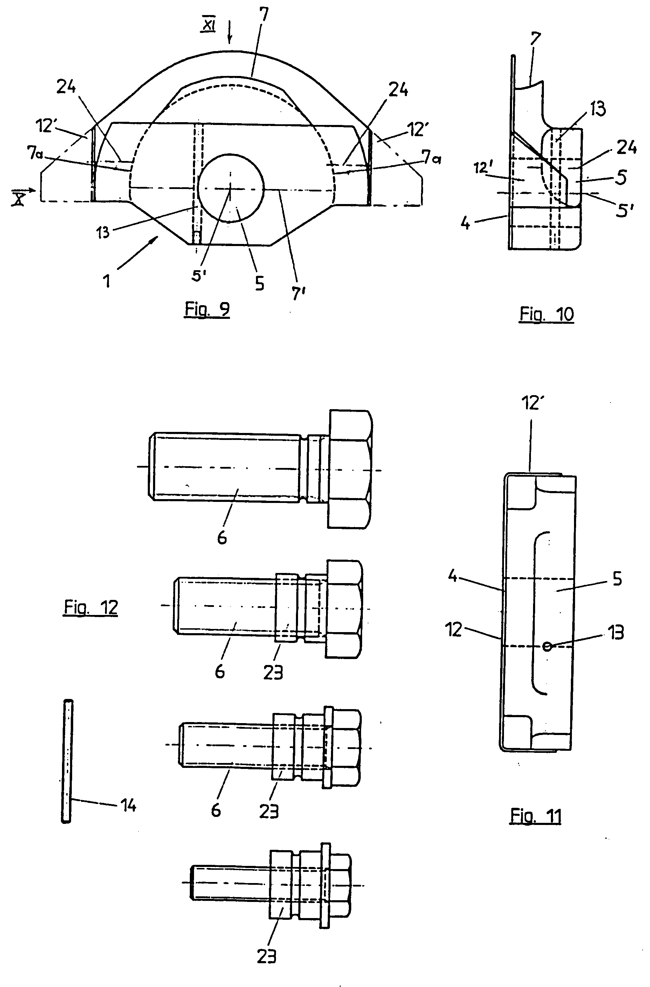

Die Explosivdarstellung nach Fig. 1 zeigt die Anordnung zum Ankuppeln eines Seiles 10 (Fig. 2) an eine Hebevorrichtung als ganzes samt Zuganker 6, einem Gewindebolzen, der in eine in das Fertigteil 2 eingegossene Gewindehülse 19 (Fig. 2 und 3) eingeschraubt wird. Der Zuganker 6 durchgreift eine Bohrung 5 Aufnahme 1 für die Führung des Seiles. Diese Aufnahme ist, wie aus den Fig. 1 bis 10 hervorgeht, als tellerförmige Platte 1 ausgebildet, die aus einem unteren Plattenteil 1a und einem oberen Steg 9 besteht. Wie aus Fig. 1 ersichtlich, können zwischen der Aufnahme 1 und dem Zuganker 6 nach Bedarf Zwischenringe 20 und/oder Paßstücke 23 zwecks Anpassung an verschiedene Größen des Zugankers 6 vorgesehen sein. Dadurch kann bei verschiedenen Lastfällen der jeweils erforderliche Zuganker 6 auf ein und dieselbe Größe der einbetonierten Gewindehülse 19 angepaßt werden, wie dies in Fig. 12 an vier unterschiedlichen Zugankergrößen dargestellt ist.

Mit 12 ist in Fig. 1 eine untere Abdeckung der plan ausgebildeten Grundfläche 4 der plattenförmigen Aufnahme 1 bezeichnet, die gleichfalls vom Zuganker 6 durchdrungen wird.

Die in einfacher Weise als Platte ausgebildete Aufnahme 1 zur Führung des Seiles 10 ist auf der Oberfläche 2' des Fertigteiles 2 durch den Zuganker 6 abgestützt und um 360° drehbar gelagert, derart, daß sie sich jeweils auf die entsprechende Zugrichtung des Seiles einstellen kann.

Nach der Erfindung ist die als Platte ausgebildete Aufnahme 1 zur direkten Auflage auf der Oberfläche 2' des Fertigteiles 2 ausgebildet, und zwar derart, daß der an der Aufnahme 1, vorzugsweise an deren Umfang, angebrachte Abschnitt 7 mit dem anliegenden Seil 10 wenigstens annähernd parallel und unmittelbar neben bzw. oberhalb der Oberfläche 2' des Fertigteiles liegt. Hierzu ist die Grundfläche 4 der als Platte 1 ausgebildeten Aufnahme eine plane Fläche, die im montierten Zustand unter Zwischenlage der Abdeckung 12 unmittelbar auf der Fertigteiloberfläche 2' und parallel zu dieser liegt. Senkrecht zu dieser planen Grundfläche 4 befindet sich die Bohrung 5, die die Platte 1 durchdringt und den Zuganker 6 aufnimmt.

Zentrisch zur Bohrung 5 ist am Umfang der Platte 1 der Seilführungsabschnitt 7 vorgesehen, der über einen Winkel von 180° reicht. Um diesen Abschnitt 7 ist das Seil 10 geführt; es liegt somit an der Stirnseite der tellerartigen Platte 1 im montierten Zustand an, wie dies aus den Fig. 2 bis 4 ersichtlich ist.

Um eine sichere Führung des Seiles 10 in diesem Bereich zu erhalten, kann der Seilführungsabschnitt 7 entsprechend der Krümmung und Dicke des Seiles mit einer konkav gekrümmten Anlagefläche für das Seil versehen sein. Die untere Abdeckung 12 hat hochkant gestellte seitliche Führungsflächen 12', die auch bis über den vorderen Bereich des Seilführungsabschnittes 7 verlaufen können, um das Seil, insbesondere bei der Montage oder Demontage der Vorrichtung, sicher zu haltern.

Infolge der Ausbildung der Aufnahme 1 als flache, um 360° drehbare, mit einem Seilführungsabschnitt 7 an ihrem Umfang versehene Platte, die unmittelbar auf der Fertigteiloberfläche 2' aufliegt, wird das Seil direkt an der Betonoberfläche 2' und parallel zu dieser geführt, so daß praktisch keine Biegebeanspruchungen auf den Zuganker 6 und die Gewindehülse 19 einwirken, wodurch die Tragfähigkeit der Gewindehülse und der Aufnahme 1 selbst erheblich verbessert werden, zumal die in dem halbkreisförmig geführten Abschnitt des Seiles 10 wirkenden Zugkräfte mit vergleichsweise niedriger Flächenpressung an dem halbkreisförmigen Seilführungsabschnitt 7 anliegen. Die Platte 1 ist daher im wesentlichen in vorteilhafter Weise Druckkräften ausgesetzt und kann demgemäß vergleichsweise einfach gestaltet und optimal, insbesondere material- und gewichtsparend dimensioniert werden.

Um bei allen möglichen Belastungsrichtungen die wirksamen Kräfte zu minimieren und zu hohe Beanspruchungen des Seiles selbst, insbesondere dessen Abknickung bei schräg aufwärtsgerichtetem Zug zu vermeiden, ist an den beiden Endbereichen 7a des Seilführungsabschnittes 7 an der Platte 1 je eine Umlenkfläche 11 bzw. 11' vorhanden, die das Seil 10 von der Fertigteiloberfläche 2' weg nach oben in Richtung zur Hebevorrichtung führt.

In den dargestellten Ausführungsbeispielen sind diese diametral einander gegenüberliegenden, nach oben weisenden Umlenkflächen 11, 11' an den Enden des diagonal zum Seilführungsabschnitt 7 liegenden Steges 9 angeordnet. Dieser Steg 9 befindet sich auf der Oberseite der Platte 1 und ist einstückig mit dieser ausgebildet, so daß die Platte 1 und damit die Aufnahme selbst zusätzlich verstärkt wird und einen stabilen, gegen Druckkräfte massiven Vorrichtungsteil bildet. Der Steg 9 ist ferner so ausgebildet, daß er die Platte 1 an den einander gegenüberliegenden Endbereichen 7a des Seilführungsabschnittes 7 überragt, wobei jeweils die überstehenden Unterseiten des Steges 9 parallel zur Betonoberfläche 2' verlaufende Begrenzungsflächen 15, 15' bilden, die in die nach oben gebogen verlaufenden Umlenkflächen 11, 11' übergehen. Ein wesentliches Merkmal liegt darin, daß die Zentren der annähernd kreisbogenförmig nach oben führenden Umlenkflächen 11, 11' gegenüber der Achse 5' der Bohrung 5 versetzt sind, derart, daß auch unter Zug- und Schrägbeanspruchung die zusätzlichen Zug- und Biegekräfte auf die Gewindehülse 19 und den Zuganker 6 optimal gering gehalten werden.

Durch diesen Versatz der Umlenkflächen 11 und 11' und ihrer rückseitigen Abschlußkanten 16 bzw. 16' wird die Beanspruchung des Zugankers 6, insbesondere auf Zug und Biegung, und zwar für alle auftretenden Lastfälle in Lastrichtung optimal minimiert, wobei durch die Abrundung der im Bogen nach oben verlaufenden Umlenkflächen 11, 11' beim Anheben scharfe Abknickungen des Seiles vermieden werden. Zweckmäßig verlaufen die Abschlußkanten 16, 16' der Umlenkflächen 11, 11' parallel zu dem Durchmesser 7', der den Halbkreis des Seilführungsabschnittes 7 begrenzt.

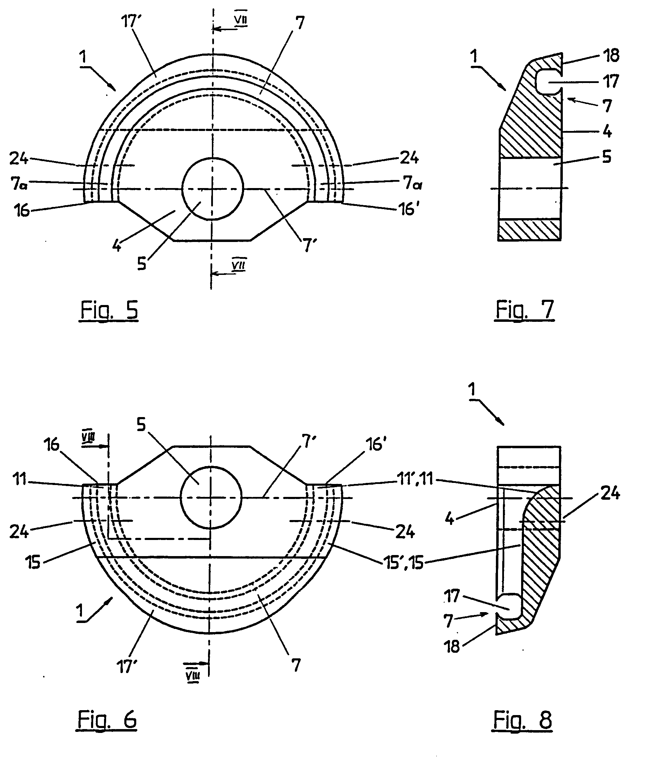

Bei der Ausführung nach den Fig. 5 bis 8 ist eine tunnelartige Ausnehmung 17 an der Platte 1 für das Seil vorgesehen, in der sich der Seilführungsabschnitt 7 befindet. Diese tunnelartige Ausnehmung 17 umschließt das Seil derart, daß es formschlüssig geführt und vorzugsweise derart gehaltert ist, daß es sich auch bei Montage oder Demontage der Vorrichtung nicht von dieser lösen kann.

Die tunnelartige Ausnehmung 17 ist ferner so gestaltet, daß sie die Platte 1 bei auftretenden Kippkräften auf der Betonoberfläche 2' abzustützen vermag. Zu diesem Zweck ist die tunnelartige Ausnehmung 17 bis zur planen Grundfläche 4 der Platte 1 heruntergeführt und im unteren Bereich als Abstützfläche 18 ausgebildet. Auf diese Weise ist das Seil bis auf seine Unterseite von der Platte 1 vollständig umgeben, wobei durch die besondere Ausbildung der vorderen Unterseite der Platte als Abstützfläche 18 eine günstige Abstützung der Platte auf der Fertigteiloberfläche 2' erreicht wird. Durch diese tunnelartige Umfassung der Seilführung wird der Hebelarm der Abstützkraft im Bereich der Betonoberfläche vorteilhaft vergrößert.

Zur Vergrößerung des Hebelarms der Abstützkraft kann die Platte 1 auch oval ausgeführt werden. In den Fig. 5 und 6 ist dargestellt, daß der der die tunnelartige Ausnehmung 17 begrenzende vordere Teil 17' der Platte 1 einen gegenüber der Kreisform vorspringenden ovalen Ansatz hat, durch welchen die eigentliche Abstützflache 18 vergrößert wird. Das Seil selbst kann trotz der tunnelartigen Ausnehmung 17 problemlos ausgewechselt werden und ist mit der Vorrichtung unverlierbar verbunden. Gleichzeitig wird verhindert, daß das Seil seine stirnseitige Lage innerhalb der Seilführung 7 verlieren kann.

Die Aufnahme 1 in Form einer Platte für die Seilführung kann samt Steg 9 mit seinen Umlenkflächen 11, 11' und den Begrenzungsflächen 15, 15' als ganzes unter Einbeziehung der tunnelartigen Ausnehmung als Gußteil oder Schmiedeteil hergestellt werden.

Der Versatz der Zentren 24 der nach oben führenden Umlenkflächen 11, 11' ist so ausgelegt, daß er für alle Kraftrichtungen optimal ist. Dieser Versatz ist abhängig vom Seildurchmesser und den Kraftangriffswinkeln; seine optimale absolute Größe kann in einfacher Weise, beispielsweise empirisch, ermittelt werden. Wesentlich ist, daß infolge dieses Versatzes bei jeder beliebigen Zugrichtung die zusätzliche Zug- und Biegebeanspruchung des Zugankers 6 und der eingegossenen Hülse 19 minimiert wird. Die Seilumlenkung durch die Führung 7 praktisch direkt an der Betonoberfläche bewirkt bei Querzug, daß die Platte und der Zuganker minimal beansprucht werden. Wirkt die Zugkraft parallel zur Betonoberfläche, entspricht der wirksame Hebelarm nur der Hälfte des Seildurchmessers.

Wie die Fig. 1 und 9 bis 11 zeigen, ist in der Platte 1 winklig zur Achse 5' der Bohrung 5 eine zusätzliche Bohrung 13 vorgesehen, die zur Aufnahme eines Sicherungsstiftes 14 dient. Dieser Sicherungsstift 14 greift in eine ringförmige Ausnehmung 22 eines der Paßstücke 23 ein, die je nach Durchmesser des verwendeten Zugankers 6 eingesetzt werden (Fig. 12).

## Patentansprüche

1. Anordnung zum Ankuppeln eines Seiles einer Hebevorrichtung an ein Fertigteil, insbesondere Betonfertigteil, mit einer Aufnahme für das Seil, die auf der Fertigteiloberfläche mit einem Zuganker abgestützt und drehbar gelagert ist,
dadurch gekennzeichnet, daß die Aufnahme (1) zur Auflage auf der Fertigteiloberfläche (2) ausgebildet ist und ein an der Aufnahme (1) befindlicher Abschnitt (7) für die Führung des Seiles (10) angeordnet ist, der wenigstens annähernd parallel zur Oberfläche (2') des Fertigteiles (2) und unmittelbar neben dieser vorgesehen ist.

2. Anordnung nach Anspruch 1,
dadurch gekennzeichnet, daß die Aufnahme (1) als Platte und der Abschnitt (7) zur Führung des Seiles (10) bogenförmig ausgebildet ist.

3. Anordnung nach einem der Ansprüche 1 oder 2,
dadurch gekennzeichnet, daß die Aufnahme (1) senkrecht zu ihrer planen Grundfläche (4) eine Bohrung (5) zur Aufnahme des Zugankers (6) aufweist.

4. Anordnung nach einem der Ansprüche 1 bis 3,
dadurch gekennzeichnet, daß der Seilführungsabschnitt (7) zentrisch zur Bohrung (5) am Umfang der Platte (1) vorgesehen ist und wenigstens annähernd über einen Winkel von 180° an der annähernd halbkreisförmigen oder halbovalen Platte ausgebildet ist.

5. Anordnung nach einem der Ansprüche 1 bis 4,
dadurch gekennzeichnet, daß versetzt zur Achse (5') der Bohrung (5) Mittel (11, 11') zur Umlenkung des Seiles (10) von der Richtung parallel zur Oberfläche(2') des Fertigteiles (2) nach oben in die äußere Zugrichtung vorgesehen sind.

6. Anordnung nach einem der Ansprüche 1 bis 5,
dadurch gekennzeichnet, daß die Platte (1) an den beiden Endbereichen (7a) des Seilführungsabschnittes (7) Umlenkflächen (11, 11') aufweist, derart, daß das Seil (10) von der Fertigteiloberfläche (2') weg nach oben in Richtung zur Hebevorrichtung geführt ist.

7. Anordnung nach einem der Ansprüche 1 bis 6,
dadurch gekennzeichnet, daß die nach oben gerichteten Umlenkflächen (11, 11') an den Enden eines über dem Seilführungsabschnitt (7) liegenden Steges (9) vorgesehen sind.

8. Anordnung nach Anspruch 7,
dadurch gekennzeichnet, daß der Steg (9) auf der Oberseite der Platte (1) angeordnet und mit dieser einstückig ausgebildet ist und die einander gegenüberliegenden Endbereiche (7a) des Seilführungsabschnittes (7) überragt, und daß ferner jeweils an der Unterseite der beiden überstehenden Teile des Steges (9) die nach oben abgebogenen Umlenkflächen (11, 11') sowie diesen vorgelagerte, die Seilführung sichernde Begrenzungsflächen (15, 15') vorgesehen sind.

9. Anordnung nach einem der Ansprüche 1 bis 8,
dadurch gekennzeichnet, daß die Zentren (24) der nach oben führenden Umlenkflächen (11, 11') gegenüber der Achse (5') der Bohrung (5) versetzt sind.

10. Anordnung nach Anspruch 9,
dadurch gekennzeichnet, daß die Abschlußkanten (16, 16') der Umlenkflächen (11, 11') parallel zu dem Durchmesser (7') liegen, der den Halbkreis des Seilführungsabschnittes (7) begrenzt.

11. Anordnung nach einem der Ansprüche 1 bis 10,
dadurch gekennzeichnet, daß der Seilführungsabschnitt (7) als tunnelartige Ausnehmung (17) der Platte (1) ausgebildet ist, derart, daß das Seil (10) in der Ausnehmung (17) formschlüssig gehalten ist.

12. Anordnung nach Anspruch 11,
dadurch gekennzeichnet, daß die tunnelartige Ausnehmung (17) bis zu der Grundfläche (4) der plattenförmigen Aufnahme (1) heruntergeführt ist und am unteren Ende als Abstützfläche (18) ausgebildet ist.

13. Anordnung nach einem der Ansprüche 1 bis 12,
dadurch gekennzeichnet, daß zwischen der Platte (1) und der Fertigteiloberfläche (2') eine vorzugsweise dünnwandige Abdeckung (12) vorgesehen ist.

14. Anordnung nach einem der Ansprüche 1 bis 13,
dadurch gekennzeichnet, daß die Platte (1) im Winkel zur Bohrung (5) eine zusätzliche Bohrung (13) zur Aufnahme eines Sicherungsstiftes (14) aufweist.

15. Anordnung nach einem der Ansprüche 1 bis 14,
dadurch gekennzeichnet, daß für ein und dieselbe Gewindehülse (19) Zuganker unterschiedlichen Durchmessers verwendbar sind, wobei Zuganker mit kleinerem Durchmesser mit entsprechenden Paßstücken (23) versehen sind und die Paßstücke eine ringförmige Ausnehmung (22) für einen Sicherungsstift (14) aufweisen.

## Claims

1. Arrangement for connecting a cable of a lifting device to a finished part, especially a precast concrete part, with a holder for the cable, which holder is supported and mounted to rotate on the surface of the finished part by a tie-rod, characterised in that the holder (1) is constructed to rest on the finished part surface (2) and a section (7) located on the holder (1) is arranged for the guidance of the cable (10), which section is provided at least approximately parallel to the surface (2') of the finished part (2) and directly beside the latter.

2. Arrangement according to Claim 1, characterised in that the holder (1) is constructed as a plate and the section (7) for the guidance of the cable (10) is curved.

3. Arrangement according to one of Claims 1 or 2, characterised in that at right angles to its flat bottom surface (4), the holder (1) comprises a bore (5) for receiving the tie-rod (6).

4. Arrangement according to one of Claims 1 to 3, characterised in that the cable guidance section (7) is provided centrally with respect to the bore (5) on the periphery of the plate (1) and is constructed at least approximately over an angle of 180° on the approximately semi-circular or semi-oval plate.

5. Arrangement according to one of Claims 1 to 4, characterised in that offset with respect to the axis (5') of the bore (5), means (11, 11') are provided for deflecting the cable (10) from the direction parallel to the surface (2') of the finished part (2) upwards in the outer pulling direction.

6. Arrangement according to one of Claims 1 to 5, characterised in that at the two end regions (7a) of the cable guidance section (7), the plate (1) comprises deflection surfaces (11, 11') so that the cable (10) is guided away from the finished part surface (2') upwards in the direction of the lifting device.

7. Arrangement according to one of Claims 1 to 6, characterised in that the upwardly directed deflection surfaces (11, 11') are provided at the ends of a cross-piece (9) lying above the cable guidance section (7).

8. Arrangement according to Claim 7, characterised in that the cross-piece (9) is located on the upper side of the plate (1) and is constructed in one piece with the latter and projects beyond the opposing end regions (7a) of the cable guidance section (7) and that furthermore provided respectively on the under side of the two projecting parts of the cross-piece (9) are the upwardly curved deflection surfaces (11, 11') as well as boundary surfaces (15, 15') preceding the latter and ensuring the guidance of the cable.

9. Arrangement according to one of Claims 1 to 8, characterised in that the centres (24) of the deflection surfaces (11, 11') leading upwards are offset with respect to the axis (5') of the bore (5).

10. Arrangement according to Claim 9, characterised in that the closure edges (16, 16') of the deflection surfaces (11, 11') lie parallel to the diameter (7'), which defines the semi-circle of the cable guidance section (7).

11. Arrangement according to one of Claims 1 to 10, characterised in that the cable guidance section (7) is constructed as a tunnel-like recess (17) in the plate (1) so that the cable (10) is held in the recess (17) in a form-locking manner.

12. Arrangement according to Claim 11, characterised in that the tunnel-like recess (17) is guided to the bottom surface (4) of the plate-like holder (1) and at the lower end is constructed as a support surface (18).

13. Arrangement according to one of Claims 1 to 12, characterised in that a preferably thin-walled cover (12) is provided between the plate (1) and the finished part surface (2').

14. Arrangement according to one of Claims 1 to 13, characterised in that at an angle with respect to the bore (5), the plate (1) comprises an additional bore (13) for receiving a locking pin (14).

15. Arrangement according to one of Claims 1 to 14, characterised in that for one and the same threaded sleeve (19), tie-rods of different diameter can be used, in which case tie-rods with a smaller diameter are provided with corresponding adjusting pieces (23) and the adjusting pieces comprise an annular recess (22) for a locking pin (14).

## Revendications

1. Dispositif d'attache d'un câble d'un appareil de levage à un élément préfabriqué, en particulier un élément préfabriqué en béton, comportant un récepteur pour le câble qui est appuyé par un tirant sur la face supérieure de l'élément préfabriqué et est monté tournant, caractérisé par le fait que le récepteur (1) est conçu pour s'appuyer sur la face supérieure de l'élément préfabriqué (2), et pour le guidage du câble (10) est prévue une partie (7) située sur le récepteur (1) qui est prévue au moins à peu prés parallèlement à la face supérieure (2') de l'élément préfabriqué et tout près de celle-ci.

2. Dispositif selon la revendication 1, caractérisé par le fait que le récepteur (1) est constitué d'une plaque et la partie (7) pour le guidage du câble (10) est arquée.

3. Dispositif selon l'une des revendications 1 et 2, caractérisé par le fait que le récepteur (1) présente perpendiculairement à sa surface de base plane (4) un trou (5) destiné à recevoir le tirant (6).

4. Dispositif selon l'une des revendications 1 à 3, caractérisé par le fait que la partie de guidage de câble (7) est prévue centrée sur le trou (5) sur le pourtour de la plaque (1) et embrasse au moins approximativement un angle de 180° sur la plaque, qui est approximativement en forme de demi-cercle ou de demi-ovale.

5. Dispositif selon l'une des revendications 1 à 4, caractérisé par le fait que des moyens (11, 11') de déviation du câble (10) de la direction parallèle à la face supérieure (2') de l'élément préfabriqué (2) vers le haut dans la direction extérieure de traction sont prévus à l'écart de l'axe (5') du trou (5).

6. Dispositif selon l'une des revendications 1 à 5, caractérisé par le fait que la plaque (1) présente dans les deux zones d'extrémité (7a) de la partie de guidage de câble (7) des surfaces de déviation (11, 11') de façon telle que le câble (10) soit, de la face supérieure (2') de l'élément préfabriqué, dirigé vers le haut en direction de l'appareil de levage.

7. Dispositif selon l'une des revendications 1 à 6, caractérisé par le fait que les surfaces de déviation dirigées vers le haut (11, 11') sont prévues aux extrémités d'une barrette (9) située au-dessus de la partie de guidage de câble (7).

8. Dispositif selon la revendication 7, caractérisé par le fait que la barrette (9) est située sur la face supérieure de la plaque (1) et fait corps avec celle-ci et dépasse les zones d'extrémité opposées (7a) de la partie de guidage de câble (7), et qu'en outre, les surfaces de déviation recourbées vers le haut (11, 11') et des surfaces de limitation (15, 15') placées avant celles-ci et assurant le guidage du câble sont prévues sur le dessous des deux parties dépassantes de la barrette (9).

9. Dispositif selon l'une des revendications 1 à 8, caractérisé par le fait que les centres (24) des surfaces de déviation montantes (11, 11') sont décalés par rapport à l'axe (5') du trou (5).

10. Dispositif selon la revendication 9, caractérisé par le fait que les bords terminaux (16, 16') des surfaces de déviation (11, 11') sont parallèles au diamètre (7') qui limite le demi-cercle de la partie de guidage de câble (7).

11. Dispositif selon l'une des revendications 1 à 10, caractérisé par le fait que la partie de guidage de câble (7) est constituée d'un évidement du genre tunnel (17) de la plaque (1) de façon telle que le câble (10) soit tenu par emboîtement dans l'évidement (17).

12. Dispositif selon la revendication 11, caractérisé par le fait que l'évidement du genre tunnel (17) descend jusqu'à la surface de base (4) du récepteur en forme de plaque (1) et forme une surface d'appui (18) à son extrémité inférieure.

13. Dispositif selon l'une des revendications 1 à 12, caractérisé par le fait qu'entre la plaque (1) et la face supérieure (2') de l'élément préfabriqué est prévue une couverture de préférence à paroi mince (12).

14. Dispositif selon l'une des revendications 1 à 13, caractérisé par le fait que la plaque (1) présente à angle droit du trou (5) un trou supplémentaire (13) destiné à recevoir une goupille de sécurité (14).

15. Dispositif selon l'une des revendications 1 à 14, caractérisé par le fait que pour une seule et même douille filetée (19) peuvent être utilisés des tirants de différents diamètres, les tirants de plus petit diamètre étant pourvus de pièces d'ajustement correspondantes (23) et ces pièces d'ajustement présentant un évidement annulaire (22) pour une goupille de sécurité (14).
